# EUROPÄISCHE PATENTSCHRIFT

(11) **EP 0 895 996 B1**
(45) Veröffentlichungstag und Bekanntmachung des Hinweises auf die Patenterteilung: **20.11.2002**
(21) Anmeldenummer: 98112029.8
(22) Anmeldetag: 30.06.1998
(51) Int. Cl.: C07F 7/18

(54) **Verfahren zur Herstellung von Organosiliciumdisulfanen hoher Reinheit**
Process for preparing highly pure organosilicon disulfanes
Procédé pour la préparation d'organosilicium disulfanes à haute pureté

(30) Priorität: 08.08.1997 DE 19734295
(43) Veröffentlichungstag der Anmeldung: 10.02.1999
(73) Patentinhaber: Degussa AG, 40474 Düsseldorf (DE)
(72) Erfinder: Münzenberg, Jörg, Dr., 63457 Hanau (DE); Will, Werner, 63571 Gelnhausen (DE); Zezulka, Gerd, 63457 Hanau (DE)

(56) Entgegenhaltungen:
- EP-A- 0 908 463
- US-A- 5 399 739
- US-A- 5 489 701
- US-A- 5 583 245
- PATENT ABSTRACTS OF JAPAN vol. 1995, no. 11, 26. Dezember 1995 (1995-12-26) & JP 07 228588 A (SHIN ETSU CHEM CO LTD), 29. August 1995 (1995-08-29)

## Beschreibung

Die Erfindung betrifft die Herstellung von Organosiliciumdisulfanen hoher Reinheit.
Verfahren zur Herstellung von Oligosulfanen als solchen sind seit langem bekannt.

In der DE-PS 2141159 (= US-PS 3,842,111) wird ein Verfahren zur Herstellung von Bis(alkoxisilylalkayl)-oligosulfanen aus den entsprechenden Halogenalkylalkoxisilan und Alkalimetalloligosulfiden vorzugsweise in alkoholischer Lösung, beschrieben.
Man erhält auf diesem Wege jedoch nur Gemische von Sulfanen mit unterschiedlichen Kettenlängen.
Nach einem in der DE-PS 2712866 (= US-PS 4,129,585) beschriebenen Verfahren setzt man ein Alkalimetallalkoholat mit einem Halogenalkylalkoxisilan, Metall- bzw. Ammoniumhydrogensulfid und Schwefel in Gegenwart eines organischen Lösungsmittels um.
Die Herstellung der Alkalimetallalkoholatlösung ist jedoch mit einem großen Zeitaufwand verbunden, der eine technische Realisierung des Verfahrens unwahrscheinlich werden läßt. Aus der US-PS 5,466,848 ist ein Verfahren bekannt, bei dem man Schwefelwasserstoff mit einem Alkoxid umsetzt, das Reaktionsprodukt mit elementarem Schwefel behandelt und dann mit einem Halogenalkylalkoxisilan zu dem gewünschten Organosiliciumpolysulfan umsetzt.

Ebenso wird gemäß US-PS 5,489,701 mit Alkoxiden und Schwefelwasserstoff gearbeitet, einer bekanntlich sehr unangenehm zu handhabenden Verbindung.
In der JP-OS 7-228588 wird die Reaktion von wasserfreiem Natriumsulfid und Schwefel mit Halogen-alkoxisilanen beschrieben.
Man erhält auf diesem Weg ein Gemisch von Polysulfanen, wie Versuche zeigten.
Verwendung finden siliciumorganische Polysulfane, insbesondere das Bis(triethoxysilylpropyl)tetrasulfan, in Kombination mit hochaktiven Kieselsäurefüllstoffen bei der Herstellung von vulkanisierten Kautschukartikeln, insbesondere Reifen.
Die vorteilhafte Verwendung von Disulfanen hoher Reinheit im Hinblick auf Verarbeitung und Eigenschaften der Vulkanisate wird in der EP-A 0732 362 (= US-PS 5,580,919) und bei Panzer (L. Panzer, American Chem. Soc., Rubber Div. Meeting 1997) beschrieben.
Aufgabe der Erfindung ist es, ein vorteilhaftes Verfahren zur Herstellung von reinen Disulfanen bereitzustellen.
Das Merkmal "Reinheit" bezieht sich insbesondere auf den Gehalt an weiteren Oligo- und Monosulfanen mit einem anderen Schwefelgehalt.

Gegenstand der Erfindung ist ein Verfahren zur Herstellung von hochreinen Organosiliciumdisulfanen der allgemeinen Formel

Z-Alk-S₂-Alk-Z (I)

in der Z für Gruppierungen 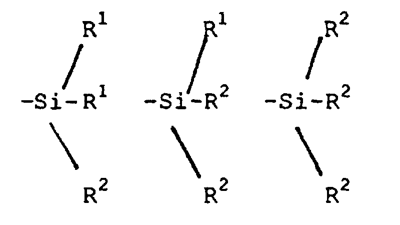 steht, in denen R¹ eine lineare oder verzweigte Alkylgruppe mit 1-5 C-Atomen, einen Cycloalkylrest mit 5-8 Atomen, den Benzylrest oder den gegebenfalls durch Methyl, Ethyl oder Chlor substituierten Phenylrest darstellt,
R² für eine Alkoxigruppe mit linearer oder verzweigter Kohlenstoffkette mit 1-5 C-Atomen oder für eine Cycloalkoxigruppe mit 5-8 C-Atomen, die Phenoxigruppe oder die Benzyloxigruppe steht, wobei R¹ und R² jeweils gleiche oder verschiedene Bedeutungen haben können,
Alk einen zweiwertigen gesättigten linearen oder verzweigten Kohlenwasserstoffrest mit 1-10 C-Atomen oder die Gruppe 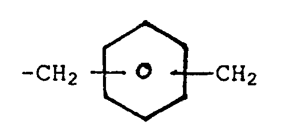 in einer zweistufigen Reaktion darstellt, das dadurch gekennzeichnet ist, daß man
1. elementaren Schwefel und ein wasserfreies Sulfid der allgemeinen Formel

   Me₂S (II),

   in der Me ein Alkalimetall oder ein Äquivalent eines Erdalkalimetallatoms oder des Zinks oder Ammonium darstellt, teilweise oder vollständig in einem polaren organischen Lösungsmittel in einem molaren Verhältnis von 1 : 0,2 bis 1 : 0,9, insbesondere 1 : 0,4 bis 1 : 0,6 löst oder suspendiert, diese Lösung bzw. Suspension mit einer Organosiliciumverbindung der allgemeinen Formel

   Z-Alk-Hal (III)

   in der Z und Alk oben angegebene Bedeutungen haben, und Hal ein Chlor- oder Bromatom ist, umsetzt, wobei das molare Verhältnis von Verbindung (III) zu Schwefel (elementar) von 1,2:1 bis 2:1, insbesondere 2:1,1 bis 2:1,2 reicht.
2. nach der Reaktion weiteres wasserfreies Me₂S in einer Menge zusetzt, daß die zur Reaktion gebrachten Gesamtmengen an Sulfid und elementarem Schwefel in etwa äquimolar zueinander sind und das gewünschte Disulfan gemäß Formel (I) isoliert.

Zu diesem Zweck filtriert man das ausgefallene Halogenid und trennt das Lösungsmittel destillativ ab.

In der Gesamtbilanz entsprechen die molaren Mengen des Schwefels und der Verbindungen (II) und (III) einem Verhältnis von 1:2:1 bis 1,4:2:1,4.

Die Ausgangssubstanzen gemäß Formel (III) können nach bekannten Verfahren hergestellt werden und sind allgemein verfügbar.
Als organische Lösungsmittel sind im Prinzip alle polaren Substanzen einsetzbar, in denen das Sulfid gemäß Formel (II) wenigstens teilweise löslich ist, und die nicht mit der Organosiliciumverbindung gemäß Formel (III) reagieren.

Vorzugsweise kommen als organisches Lösungsmittel ein linearer oder verzweigter Alkohol mit 1-5 C-Atomen, wie z.B. Methyl-, Ethyl-, Propyl-, Butyl- oder Pentylalkohol zum Einsatz. Geeignet sind auch Cycloalkylalkohole mit 5-8 C-Atomen, Phenol oder Benzylalkohol.

Sinnvollerweise wird, um z. B. eine Umesterung zu vermeiden, der jeweils zur Gruppe R² korrespondierende Alkohol verwendet. Gegebenenfalls kann auch die Verwendung eines Gemischs dieser Alkohole von Vorteil sein, z. B. wenn Alkohol verwendet. Gegebenenfalls kann auch die Verwendung eines Gemischs dieser Alkohole von Vorteil sein, z. B. wenn R² in einer Verbindung unterschiedliche Bedeutungen besitzt.

Bei der Ausführung des erfindungsgemäßen Verfahrens werden .vorzugsweise Natrium- oder Kaliumsulfid verwendet.

Zur Ausführung der erfindungsgemäßen Reaktion ist es unerheblich, in welcher Form der elementare Schwefel in den Reaktor eingebracht wird. Es ist bei gleichem Reaktionserfolg möglich, den Schwefel in fester Form, z. B. als handelsübliches Schwefelpulver oder Granulat oder in schmelzflüssiger Form zu der Na₂S Lösung bzw.-Suspension zu geben. Zur Beschleunigung des Reaktionsverlaufs ist es sinnvoll, Schwefel in feinverteilter Form, z. B. als feingemahlenes Schwefelpulver oder in feine Tropfen verdüste Schmelze einzusetzen.
Das Me₂S kann ohne Einfluß auf den Reaktionserfolg, sowohl als vermahlenes Pulver oder in Form von Plättchen, wie sie bei handelsüblichen Me₂S-Hydraten angeboten werden, eingesetzt werden.

Das gewünschte wasserfreie Me₂S kann vorteilhaft nach dem in der P 196 51849 beschriebenen Verfahren hergestellt werden.

In den Formeln (I) und (III) bedeutet Alk einen zweiwertigen Alkylenrest, z. B. Methylen sowie vorzugsweise Ethylen, i-Propylen, n-Propylen, i-Butylen oder n-Butylen, es kann aber auch n-Pentylen, 2-Methylbutylen, 3-Methylbutylen, n-Pentylen, 1,3-Dimethylpropylen und 2,3-Dimethylpropylen bedeuten. Besonders geeignet ist n-Propylen.

Weiterhin ist zu empfehlen, die Umsetzung unter Luft- und Wasser-(Feuchtigkeits)ausschluß durchzuführen, um die unter vermindertem Druck auszuführen; leicht erhöhter Druck wird ebenfalls nicht ausgeschlossen.

Man erhält mit dem erfindungsgemäßen Verfahren ein hochreines Disulfan, dessen Reinheit deutlich über dem gemäß EP-A 0732 362 geforderten Wert für die Anwendung in mit Kieselsäure verstärktem Kautschuk von mindestens 80 % liegt und das auch die nach dem Stand der Technik hergestellten Produkte ohne weiteren Reinigungsschritt deutlich in Bezug auf den Disulfidgehalt übertrifft.

### Vergleichsbeispiel

### (Stand der Technik)

In einem 10 l-Dreihalskolben mit Rückflußkühler, Rührer und Tropftrichter werden unter Inertgas 468,25 g (6 mol) Natriumsulfid und 192,38 g (6 mol) Schwefel in 2400 ml Ethanol vorgelegt. Die Mischung wird auf 50 ° C aufgewärmt. Dazu tropft man 2408,05 g (10 mol) 3-Chlorpropyltriethoxysilan so schnell zu, daß die Reaktion gerade noch beherrscht werden kann. (Zutropfzeit 25 min). Nach Beendigung der Zugabe läßt man noch 2,5 h bei Rückfluß rühren und nimmt dann vom entstandenen Produktgemisch eine Probe. Diese Probe wird filtriert und vom Filtrat das Lösungsmittel entfernt. Nach nochmaliger Filtration bestimmt man vom Filtrat die Polysulfanverteilung per ¹H-NMR-Spektroskopie. Danach sind 10,8 Gew.-% Monosulfan (Λ 2,52 ppm), 82,8 Gew.-% Disulfan (Λ 2,70 ppm) und 6,5 Gew.-% Trisulfan (Λ 2,90 ppm) vorhanden.

### Beispiel 1 - 3

### (gemäß Erfindung)

### Beispiel 1

In der Apparatur des Vergleichsbeispiels werden unter Inertgas 234,12 g (3 mol) Natriumsulfid und 192,38 g (6 mol) Schwefel in 2400 ml Ethanol vorgelegt. Die Mischung wird auf 50 ° C aufgewärmt. Dazu tropft man 2408,05 g (10 mol) 3-Chlorpropyltriethoxysilan so zu, daß die Reaktion kontrollierbar abläuft (Zutropfzeit 12 min). Danach gibt man das restliche Natriumsulfid in 4 Portionen à 58,53 g (0,75 mol) im 10 min Abstand zu. Nach Beendigung der Zugabe rührt man noch 2,5 h bei Rückfluß, entnimmt dem entstandenen Produktgemisch eine Probe. Diese Probe wird filtriert und vom Filtrat das Lösungsmittel entfernt. Nach nochmaliger Filtration bestimmt man die Polysulfanverteilung des Filtrats per ¹H-NMR-Spektroskopie.

Danach sind 2,2 Gew.-% Monosulfan (Λ 2,52 ppm) und 97,8 Gew.-% Disulfan (Λ 2,70 ppm) vorhanden.

### Beispiel 2

### (Einsatz von schmelzflüssigem Schwefel)

In einem 4 1-Doppelmantelgefäß mit Rührer, Rückflußkühler und beheizter Dosierlanze mit Düse werden 146,0 g (1,87 mol) Na₂S in 1500 ml Ethanol vorgelegt. Bei ca. 30 ° C werden in diese Suspension 120 g (3,74 mol) schmelzfüssiger Schwefel eingedüst. Die entstehende, kräftig gelbe Suspension wird auf 67 ° C erhitzt und dann 1500 g (6,23 mol) 3-Chlorpropyltriethoxysilan innerhalb von 17 min zudosiert. Weitere 146,0 g (1,87 mol) Na₂S werden in vier gleichen Portionen in 10-minütigem Abstand der Reaktionsmischung zugegeben. Nach der letzten Zugabe wird noch 2,5 h bei Rückfluß gerührt.. Nach Abkühlen wird dem entstandenen Reaktionsgemisch eine Probe entnommen, filtriert und vom Filtrat das Lösungsmittel abgedampft. Nach nochmaliger Filtration wird die Polysulfanverteiler per ¹H-NMR-Spektroskopie bestimmt. Danach sind 1,9 Gew.-% Monosulfan (δ 2,52 ppm) und 98,1 Gew.-% Disulfan (δ 2,70 ppm) vorhanden.

### Beispiel 3

### (Einsatz von granuliertem Schwefel)

In einer Apparatur entsprechend der aus Beispiel 1 werden 46,83 g (0,6 mol) Na₂S in 480 ml Ethanol suspendiert.
Danach werden 38,48 g (1,2 mol) elementarer Schwefel zugegeben, auf 60 ° C erwärmt und anschließend 481,61 g (2 mol) 3-Chlorpropyltriethoxysilan innerhalb von 4 min zudosiert. Weitere 46,83 g (0,6 mol) Na₂S werden in vier gleichen Portionen im Abstand von 10 min eingetragen. Nach Beendigung der Zugabe rührt man 2,5 h unter Rückfluß. Nach dem Abkühlen wird dem entstandenen Reaktionsgemisch eine Probe entnommen, filtriert und aus dem Filtrat das Lösungsmittel abgedampft. Nach nochmaliger Filtration findet sich folgende Polysulfanverteilung:
2,7 Gew.-% Monosulfan (δ 2,52 ppm), 97,1 Gew.-% Disulfan (δ 2,70 ppm), 0,2 Gew.-% Trisulfan (δ 2,9 ppm).

## Patentansprüche

1. Verfahren zur Herstellung von hochreinen Organosiliciumdisulfanen der allgemeinen Formel
Z-Alk-S₂-Alk-Z (I)
in der Z für Gruppierungen 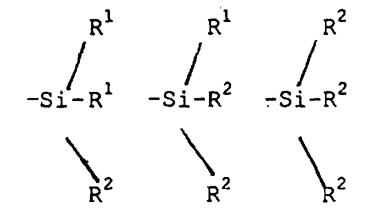 steht, in denen R¹ eine lineare oder verzweigte Alkylgruppe mit 1-5 C-Atomen, einen Cycloalkylrest mit 5-8 Atomen, den Benzylrest oder den gegebenfalls durch Methyl, Ethyl oder Chlor substituierten Phenylrest darstellt,
R² für eine Alkoxigruppe mit linearer oder verzweigter Kohlenstoffkette mit 1-5 C-Atomen oder für eine Cycloalkoxigruppe mit 5-8 C-Atomen, die Phenoxigruppe oder die Benzyloxigruppe steht, wobei R¹ und R² jeweils gleiche oder verschiedene Bedeutungen haben können,
Alk einen zweiwertigen gesättigten linearen oder verzweigten Kohlenwasserstoffrest mit 1-10 C-Atomen oder die Gruppe 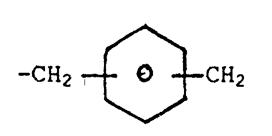 in einer zweistufigen Reaktion,
**dadurch gekennzeichnet,**
**daß** man
1. elementaren Schwefel und ein wasserfreies Sulfid der allgemeinen Formel
Me₂S (II),
in der Me ein Alkalimetall oder ein Äquivalent eines Erdalkalimetallatoms oder des Zinks oder Ammonium darstellt, teilweise oder vollständig in einem polaren organischen Lösungsmittel in einem molaren Verhältnis von 1 : 0,2 bis 1 : 0,9 löst oder suspendiert, diese Lösung bzw. Suspension mit einer Organosiliciumverbindung der allgemeinen Formel
Z-Alk-Hal (III)
in der Z und Alk oben angegebene Bedeutungen haben, und Hal ein Chlor- oder Bromatom ist, wobei das molare Verhältnis von Verbindung (III) zu Schwefel von 1,2:1 bis 2:1 reicht.
2. nach der Reaktion weiteres wasserfreies Me₂S in einer Menge zusetzt, daß die zur Reaktion gebrachten Gesamtmengen an Sulfid und elementarem Schwefel in etwa äquimolar sind und das gewünschte Disulfan isoliert.

2. Verfahren gemäß Anspruch 1,
**dadurch gekennzeichnet,**
**daß** man als Lösungsmittel jeweils mit dem Rest R² korrespondierende Alkohole bzw. aromatische Hydroxyverbindungen einsetzt.

3. Verfahren gemäß den Ansprüchen 1 und 2,
**dadurch gekennzeichnet,**
**daß** man Natrium- oder Kaliumsulfid einsetzt.

4. Verfahren gemäß den Ansprüchen 1 bis 3,
**dadurch gekennzeichnet,**
**daß** man in Stufe 1 elementaren Schwefel und das Sulfid gemäß Formel (II) in einem molaren Verhältnis von 1 : 0,4 bis 1 : 0,6 löst oder supendiert.

5. Verfahren gemäß den Ansprüchen 1 bis 4,
**dadurch gekennzeichnet,**
**daß** man die Verbindungen (II), (III) und Schwefel in molaren Mengen einsetzt, die der Gesamtbilanz von 1:2:1 bis 1,4:2:1,4 entsprechen.

6. Verfahren gemäß den Ansprüchen 1 bis 5,
**dadurch gekennzeichnet,**
**daß** man als Organosilicumverbindung gemäß Formel (III) γ-Chlorpropyltriethoxi- oder methoxisilan einsetzt.

7. Verfahren gemäß anspruch 1,
**dadurch gekennzeichnet,**
**daß** man den Schwefel in Form einer feinverdüsten Schmelze einsetzt.

8. Verfahren gemäß Anspruch 1,
**dadurch gekennzeichnet,**
**daß** man den Schwefel als fein vermahlenes Pulver einsetzt.

9. Verfahren gemäß Anspruch 1,
**dadurch gekennzeichnet,**
**daß** man das wasserfreie Me₂S in der zweiten Stufe in Teilmengen zusetzt.

## Claims

1. A process for the production of high-purity organosilicon disulfanes of the general formula
Z-Alk-S₂-Alk-Z (I)
in which Z denotes groups 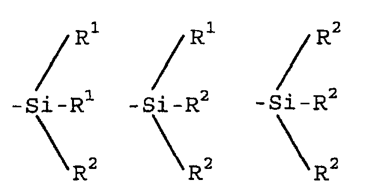 in which R¹ represents a linear or branched alkyl group with 1-5 carbon atoms, a cycloalkyl residue with 5-8 atoms, the benzyl residue, or the phenyl residue optionally substituted by methyl, ethyl or chlorine,
R² denotes an alkoxy group with a linear or branched carbon chain with 1-5 carbon atoms or a cycloalkoxy group with 5-8 carbon atoms, the phenoxy group or the benzyloxy group, where R¹ and R² may in each case have identical or different meanings,
Alk represents a divalent saturated linear or branched hydrocarbon residue with 1-10 carbon atoms or the group 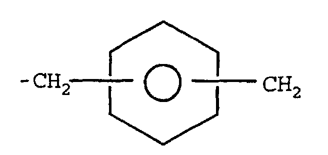 in a two-stage reaction,
**characterised in that**
1. elemental sulfur and an anhydrous sulfide of the general formula
Me₂S (II),
in which Me represents an alkali metal or an equivalent of an alkaline earth metal atom or of zinc, or ammonium, is partially or entirely dissolved or suspended in a polar organic solvent in a molar ratio of 1:0.2 to 1:0.9, this solution or suspension is with an organosilicon compound of the general formula
Z-Alk-Hal (III)
in which Z and Alk have the above-stated meanings, and Hal is a chlorine or bromine atom, wherein the molar ratio of compound (III) to sulfur ranges from 1.2:1 to 2:1.
2. after the reaction, further anhydrous Me₂S is added in a quantity such that the total quantities of sulfide and elemental sulfur reacted are approximately equimolar, and the desired disulfane is isolated.

2. A process according to claim 1,
**characterised in that**
alcohols or aromatic hydroxy compounds corresponding in each case with the residue R² are used as solvent.

3. A process according to claims 1 and 2,
**characterised in that**
sodium sulfide or potassium sulfide is used.

4. A process according to claims 1 to 3,
**characterised in that**
elemental sulfur and the sulfide according to formula (II) are dissolved or suspended in a molar ratio of 1:0.4 to 1:0.6 in stage 1.

5. A process according to claims 1 to 4,
**characterised in that**
the compounds (II), (III) and sulfur are used in molar quantities that correspond to the total balance of 1:2:1 to 1.4:2:1.4.

6. A process according to claims 1 to 5,
**characterised in that**
the organosilicon compound according to formula (III) used is γ-chloropropyltriethoxy- or methoxysilane.

7. A process according to claim 1,
**characterised in that**
the sulfur is used in the form of a finely atomised melt.

8. A process according to claim 1,
**characterised in that**
the sulfur is used as a finely ground powder.

9. A process according to claim 1,
**characterised in that**
the anhydrous Me₂S is added in portions in the second stage.

## Revendications

1. Procédé pour la préparation de disulfanes organosiliciés très purs de formule générale
Z-Alk-S₂-Alk-Z (I)
dans laquelle Z représente les groupements 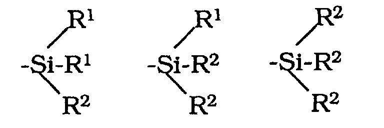 formules dans lesquelles R¹ représente un groupe alkyle linéaire ou ramifié ayant de 1 à 5 atomes de carbone, un radical cycloalkyle ayant de 5 à 8 atomes de carbone, le radical benzyle ou un radical phényle éventuellement substitué par le groupe méthyle, éthyle ou par le chlore, R² représente un groupe alcoxy à chaîne carbonée linéaire ou ramifiée, ayant de 1 à 5 atomes de carbone, ou un groupe cycloalcoxy ayant de 5 à 8 atomes de carbone, le groupe phénoxy ou le groupe benzyloxy, R¹ et R² pouvant avoir les mêmes significations ou des significations différentes.
Alk représente un radical hydrocarboné bivalent saturé, linéaire ou ramifié, ayant de 1 à 10 atomes de carbone, ou le groupe 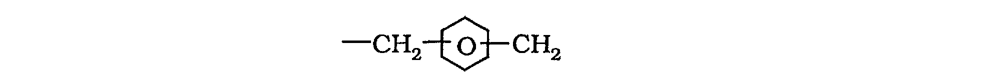 dans une réaction en deux étapes,
**caractérisé en ce que**
1. on dissout ou met en suspension du soufre élémentaire et un sulfure anhydre de formule générale
Me₂S (II)
dans laquelle Me représente un métal alcalin ou un équivalent d'un atome de métal alcalino-terreux ou le zinc ou l'ammonium, en partie ou en totalité dans un solvant organique polaire, en un rapport molaire de 1:0,2 à 1:0,9, on fait réagir cette solution ou suspension avec un composé organosilicié de formule générale
Z-Alk-Hal (III)
dans laquelle Z et Alk ont les significations données plus haut, et Hal est un atome de chlore ou de brome, le rapport molaire du composé (III) au soufre (élémentaire) allant de 1,2:1 à 2:1 ;
2. après la réaction on ajoute encore du Me₂S anhydre en une quantité telle que les quantités totales de sulfure et de soufre élémentaire mises en réaction sont approximativement équimolaires, et on isole le disulfane de formule (I) recherché.

2. Procédé selon la revendication 1,
**caractérisé en ce qu'**
on utilise comme solvant des composés hydroxylés aromatiques ou des alcools correspondants chacun au radical R².

3. Procédé selon les revendications 1 et 2,
**caractérisé en ce qu'**
on utilise le sulfure de sodium ou de potassium.

4. Procédé selon les revendications 1 à 3,
**caractérisé en ce que**
dans l'étape 1 on dissout ou met en suspension du soufre élémentaire et le sulfure de formule (II) en un rapport molaire de 1:0,4 à 1:0,6.

5. Procédé selon les revendications 1 à 4,
**caractérisé en ce qu'**
on introduit les composés (II), (III) et le soufre en quantités molaires qui correspondent au bilan global de 1:2:1 à 1,4:2:1,4.

6. Procédé selon les revendications 1 à 5,
**caractérisé en ce qu'**
on utilise comme composé organosilicié de formule (III) le γ-chloropropyltriéthoxy- ou -méthoxysilane.

7. Procédé selon la revendication 1,
**caractérisé en ce qu'**
on introduit le soufre sous forme d'une masse fondue finement pulvérisée.

8. Procédé selon la revendication 1,
**caractérisé en ce qu'**
on introduit le soufre sous forme de poudre finement broyée.

9. Procédé selon la revendication 1,
**caractérisé en ce que**
dans la seconde étape on ajoute en quantités partielles le Me₂S anhydre.
